(19) **Europäisches Patentamt**

**European Patent Office**

**Office européen des brevets**

(11) Veröffentlichungsnummer: **0 307 787 B1**

(12) **EUROPÄISCHE PATENTSCHRIFT**

(45) Veröffentlichungstag der Patentschrift: **25.11.92**

(21) Anmeldenummer: **88114634.4**

(22) Anmeldetag: **07.09.88**

(51) Int. Cl.⁵: **G06K 7/06**, G06K 13/08

(54) **Gehäuse für einen Chipkartenleser.**

(30) Priorität: **11.09.87 DE 8712368 U**

(43) Veröffentlichungstag der Anmeldung:
**22.03.89 Patentblatt 89/12**

(45) Bekanntmachung des Hinweises auf die
Patenterteilung:
**25.11.92 Patentblatt 92/48**

(84) Benannte Vertragsstaaten:
**DE FR GB**

(56) Entgegenhaltungen:
**EP-A- 0 126 332**
**EP-A- 0 139 540**
**US-A- 4 046 994**
**US-A- 4 443 693**

(73) Patentinhaber: **SIEMENS AKTIENGESELL-
SCHAFT
Wittelsbacherplatz 2
W-8000 München 2(DE)**

(72) Erfinder: **Kleine, Peter, Dipl.-Ing.
Krammerstrasse 9
W-8121 Fischen(DE)**
Erfinder: **Wechsler, Klaus, Dipl.-Ing. FH
Johannisweg 5
W-8039 Puchheim(DE)**

## Beschreibung

Die Erfindung beinhaltet einen aus einem Sokkel, einem auf dem Sockel aufbringbaren Deckel sowie einem diese beiden Teile verbindenden Aufsatz bestehendes Gehäuse für einen Chipkartenleser, wobei die genannten Gehäuseteile zusammensteckbar und im montierten Zustand untereinander gesichert sind, wobei ferner am Deckel Stege und Ansätze vorgesehen sind, die mit am Sockel angeordneten Gegenlagern zusammenarbeiten, während der Aufsatz Sicherungshaken aufweist, die am Deckel und am Sockel angeordnete Durchbrüche hintergreifen.

Ein derartiger Kartenleser ist durch die EP-A-01 26 332 bekannt. Bei dieser Anordnung sind zwei Gehäusehälften sowie ein Frontteil mittels an den Gehäuseteilen vorgesehener Ansätze, Haken und Vorsprüngen zusammensteckbar, wobei eine endgültige Sicherung der Gehäuseteile durch in Bohrungen der beiden Gehäusehälften einbringbare Verbindungsmittel wie versenkte Schrauben oder Nieten erfolgt.

Aufgabe der vorliegenden Erfindung ist es, die einzelnen Gehäuseteile so zu gestalten, daß sie ohne zusätzliche Hilfsmittel wie Schrauben oder Mieten einfach und schnell montierbar und untereinander gesichert sind.

Diese Aufgabe wird dadurch gelöst, daß einer der Sicherungshaken eine elastisch verformbare Zunge besitzt, die in der Endlage der Gehäuseteile verrastend hinter eine Nase greift, die an einer einseitig offenen schachtartigen Aufnahme vorgesehen ist.

Bei einem derartig gestalteten Gehäuse für einen Chipkartenleser erfolgt nunmehr eine endgültige Sicherung der Gehäuseteile durch die an einem der Sicherungshaken vorgesehene und elastisch verformbare Zunge, die in der Endlage der Gehäuseteile verrastend hinter eine Nase an einer einseitig offenen und schachtartigen Aufnahme greift. Durch eine derartige Rastverbindung werden keine weiteren Verbindungsmittel in Form von Schrauben oder Nieten benötigt.

Die Erfindung soll im folgenden anhand eines Ausführungsbeispiels erläutert werden.

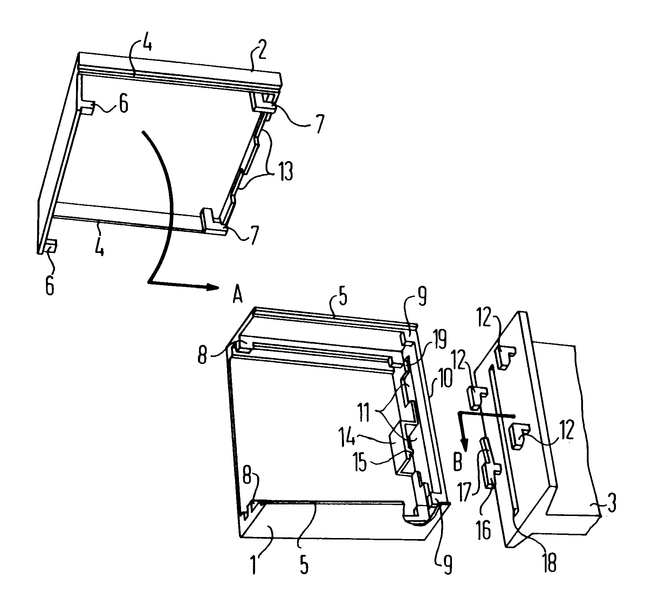

Die Abbildung zeigt in einer Explosionsdarstellung die einzelnen Teile des Gehäuses für einen Kartenleser.

Das Gehäuse für einen Kartenleser besteht im wesentlichen aus einem Sockel 1, dem auf diesen Sockel 1 aufsetzbaren Deckel 2 sowie einem diese beiden Teile verbindenden Aufsatz 3.

Wie aus der Abbildung zu ersehen ist, wird in einem ersten Schritt (Pfeilrichtung A) der Deckel 2 auf den Sockel 1 geschoben. Hierbei liegt der Deckel 2 in seinen Randbereichen 4 auf dem stufenförmig abgesetzten Randbereich 5 des Sockels 1 auf. Stege 6 und hakenförmige Ansätze 7 am Deckel 2 untergreifen in der Endlage beider Teile 1 und 2 entsprechende am Sockel vorgesehene Gegenlager 8 und 9, so daß der Deckel senkrecht zu seiner Aufschieberichtung am Sockel gesichert ist.

An einer Stirnseite 10 von Deckel und Sockel sind Durchbrüche 11 und 13 rechteckförmigen Querschnitts vorgesehen, die von Sicherungshaken 12 am Aufsatz 3 durchgriffen werden. Durch Verschieben des Aufsatzes 3 in Pfeilrichtung B werden Sockel und Deckel so gesichert, daß sie sich auch entgegen der Aufsetzrichtung des Deckels 2 nicht mehr lösen können. Im Sockel ist weiterhin eine einseitig offene schachtartige Aufnahme 14 vorgesehen, die an ihrer der Stirnseite zugewandten Wandung eine Nase 15 besitzt. Der am Aufsatz 3 angeordnete Sicherungshaken 16 besitzt eine elastisch verformbare Zunge 17. Im aufgeschobenen Zustand des Aufsatzes 3 verhakt diese Zunge 10 hinter der Nase 15 an der Aufnahme, so daß auch der Aufsatz 3 entgegen seiner Aufsteckrichtung gesichert ist.

Wie aus der Abbildung zu ersehen ist, weisen sowohl der Aufsatz 3 wie auch das aus Sockel und Deckel gebildete Gehäuseteil einen Schlitz 18 bzw. 19 zur Aufnahme einer Chipkarte auf.

## Patentansprüche

1. Aus einem Sockel (1), einem auf den Sockel (1) aufbringbaren Deckel (2) sowie einem diese beiden Teile verbindenden Aufsatz (3) bestehendes Gehäuse für einen Chipkartenleser, wobei die genannten Gehäuseteile (1, 2, 3) zusammensteckbar und im montierten Zustand untereinander gesichert sind, wobei ferner am Deckel (2) Stege und Ansätze (7) vorgesehen sind, die mit am Sockel (1) angeordneten Gegenlagern (8, 9) zusammenarbeiten, während der Aufsatz (3) Sicherungshaken (12, 16) aufweist, die am Deckel (2) und am Sockel (1) angeordnete Durchbrüche (13) hintergreifen, **dadurch gekennzeichnet,** daß einer der Sicherungshaken (16) eine elastisch verformbare Zunge (17) besitzt, die in der Endlage der Gehäuseteile (1, 2, 3) verrastend hinter eine Nase (15) greift, die an einer einseitig offenen, schachtartigen Aufnahme (14) vorgesehen ist.

## Claims

1. Housing for an IC card reader, consisting of a base (1), a cover (2) which can be fitted onto the base (1), and of a fixture (3) connecting these two parts, the said housing parts (1, 2, 3) being capable of being plugged together and being secured to one another in the assembled state, webs and projections (7) furthermore being provided on the cover (2), which interact with mating supports (8, 9) arranged on the base (1), while the fixture (3) has securing hocks (12, 16) which engage behind cut-outs (13) arranged on the cover (2) and on the base (1), characterised in that one of the securing hooks (16) has an elastically deformable tongue (17) which, in the end position of the housing parts (1, 2, 3), engages in a latching manner behind a tab (15) which is provided on a shaft-like holder (14) which is open on one side.

**Revendications**

1. Boîtier, constitué par un socle (1), un couvercle (2) pouvant être monté sur le socle (1) et un chapeau (3) reliant ces deux parties, pour un lecteur de cartes à puce, dans lequel les dites parties (1,2,3) du boîtier peuvent être réunies par enfichage et sont bloquées les unes par rapport aux autres à l'état monté, et dans lequel en outre il est prévu, sur le couvercle (2), des barrettes et des appendices saillants (7), qui coopèrent avec des supports antagonistes (8,9) montées sur le socle (1), tandis que le chapeau (3) comporte des crochets de sécurité (12,16) qui s'engagent dans des ouvertures (13) ménagées dans le couvercle (2) et dans le socle (1), caractérisé par le fait que l'un des crochets de sécurité (16) possède une languette déformable élastiquement (17), qui, lorsque les éléments (1,2,3) du boîtier sont dans leur position finale, s'engage par encliquetage derrière un ergot (15) qui est prévu sur un logement en forme de puits (14) ouvert unilatéralement.